Europäisches Patentamt

European Patent Office

Office européen des brevets

(11) Veröffentlichungsnummer: **0 115 263**

**A1**

## (12) EUROPÄISCHE PATENTANMELDUNG

(21) Anmeldenummer: 83890240.1

(22) Anmeldetag: 30.12.83

(51) Int. Cl.³: **A 61 F 9/00**
**A 61 H 5/00**

(30) Priorität: 31.12.82 AT 4739/82

(43) Veröffentlichungstag der Anmeldung:
08.08.84 Patentblatt 84/32

(84) Benannte Vertragsstaaten:
CH DE FR GB IT LI NL SE

(71) Anmelder: Wilde, Andreas
Ebenzweier 113
A-4813 Altmünster(AT)

(72) Erfinder: Wilde, Andreas
Ebenzweier 113
A-4813 Altmünster(AT)

(74) Vertreter: Boeckmann, Peter, Dipl.-Ing. et al,
Patentanwälte Dipl.-Ing. Peter Boeckmann, Dipl.-Ing. Leo
Brauneiss Strohgasse 10
A-1030 Wien(AT)

(54) Vorrichtung zur Schulung bzw. zum Training der ausseren Augenmuskulatur.

(57) Zur Schulung bzw. zum Training der äußeren Augenmuskulatur, insbesondere bei Heterophorie (Augenstellungsfehler) oder Strabismus (Schielen) dient ein Filterschirm (1), der ein Bild (14) abdeckt und, vorzugsweise zu gleichen Anteilen, aus Polarisationsfiltern (2,3) zweier unterschiedlicher Polarisationsrichtungen zusammengesetzt ist. Der Patient trägt eine Brille (7), die für die beiden Augen (6) lineare Polarisationsfilter (8,9) hat, von denen die Polarisationsrichtung des dem einen Auge (6) zugeordneten filters (8) normal zu jener des dem anderen Auge (6) zugeordneten Filters (9) ist. Diese beiden Polarisationsrichtungen sind gleich den beiden Polarisationsrichtungen der Filter (2,3) des Schirmes (1).

FIG.2

## Vorrichtung zur Schulung bzw. zum Training der äußeren Augenmuskulatur

Die Erfindung bezieht sich auf eine Vorrichtung zur Schulung bzw. zum Training der äußeren Augenmuskulatur, insbesondere bei Heterophorie oder Strabismus, mit einer Brille.

Es ist bekannt, daß zahlreiche Personen, insbesondere Kinder oder Rekonvaleszente nach Augenmuskeloperationen, an Fehlern oder einer Schwäche der äußeren Augenmuskulatur leiden, insbesondere an Heterophorie (Augenstellungsfehler) oder Strabismus (Schielen). Man hat bisher versucht, in solchen Fällen durch Spezialbrillen eine Besserung zu erzielen, jedoch ist der Erfolg in vielen Fällen ausgeblieben oder nicht im gewünschten Maße eingetreten. Einer der Gründe hiefür kann darin gesehen werden, daß der Patient bewußt oder unbewußt nur monukular sieht.

Die Erfindung setzt sich zur Aufgabe, eine Vorrichtung der eingangs beschriebenen Art so zu verbessern, daß dem Patienten ein monokulares Sehen nicht möglich ist, so daß der Patient gezwungen wird, die vorhandenen Augenstellungsanomalien bzw. den Schielfehler durch Fusion auszugleichen. Die Erfindung löst diese Aufgabe dadurch, daß die Brille für die beiden Augen lineare Polarisationsfilter hat, von denen die Polarisationsrichtung des dem einen Auge zugeordneten Filters normal zu jener des dem anderen Auge zugeordneten Filters ist und daß ein ein Bild abdeckender Filterschirm vorhanden ist, der aus linearen Polarisationsfiltern zusammengesetzt ist, deren Polarisationsrichtungen gleich sind den beiden Polarisationsrichtungen der Polarisationsfilter der Brille.

Es ist bekannt, daß natürliches Licht eine elektromagnetische Welle ist, bei der die Schwingungsrichtung normal zur Fortpflanzungsrichtung liegt, wobei alle möglichen Schwingungsrichtungen im Mittel gleich oft vorkommen. Filtert man aus natürlichem Licht mit einem Polarisationsfilter eine bestimmte Schwingungsrichtung heraus, so erhält man hinter diesem Polarisationsfilter linear polarisiertes Licht, d.h. Licht, das nur in einer einzigen Ebene schwingt. Schaltet man hinter diesen Polarisationsfilter einen zweiten Polarisationsfilter, dessen Polarisationsrichtung normal zur jener des ersten Filters liegt, so wird das Licht, das durch den ersten Polarisationsfilter hindurchgelassen wird, vollständig absorbiert. Ist jedoch die Polarisationsrichtung des zweiten Filters gleich jener des ersten Filters, so wird das Licht unverändert hindurch gelassen.

Die Erfindung macht von diesen physikalischen Grundlagen dadurch Gebrauch, daß durch die den beiden Augen zugeordneten linearen Polarisationsfilter eine Trennwirkung erreicht wird. Der Betrachter kann mit dem rechten Auge nur jenen Teil des Bildes sehen, der von jenem linearen Polarisationsfiltern des Filterschirmes abgedeckt ist, deren Polarisationsrichtung gleich ist der Polarisationsrichtung des Polarisationsfilters des rechten Auges. Analog verhält es sich mit dem linken Auge, so daß der Betrachter mit jedem Auge nur einen Winkel des Bildes sehen kann. Nur wenn der Betrachter seine vorhandene Augenstellungsanomalie bzw. den Schielfehler durch Fusion ausgleicht, kann er ein ganzes Bild erkennen, was den erwünschten Trainingseffekt auf die äußere Augenmuskulatur zur Folge hat. Sieht der Betrachter jedoch monokular, also nur mit einem Auge, so erscheint ihm ein Teil des Bildes schwarz.

Gemäß einer bevorzugten Ausführungsform der Erfindung besteht der Filterschirm zu gleichen Anteilen aus Polarisationsfiltern der beiden Polarisationsrichtungen. Damit werden für beide Augen gleiche Verhältnisse geschaffen. Zweckmäßig ist hiebei die Anordnung so getroffen, daß die eine Hälfte des Filterschirmes der einen Polarisationsrichtung, die andere der anderen Polarisationsrichtung angehört.

- 3 -

0115263

Dies läßt sich leicht dadurch realisieren, daß am Filterschirm die beiden Filter in der Bildmitte zusammenstoßen.
Sie dürfen sich hiebei jedoch nicht überlagern, da sonst in
der Bildmitte ein schwarzer Strich entstünde.

Das Bild kann ein stehendes Bild sein, jedoch ist es erfindungsgemäß zur Erzielung längerer Betrachtungszeiten
günstiger, wenn das Bild ein bewegtes Bild, insbesondere
ein Fernsehbild ist. Damit werden bessere Schulungseffekte
erreicht.

Die Polarisationsfilter der Brille können im Rahmen
der Erfindung Gläser oder Folien sein. Für Brillenträger
können die Polarisationsfilter der Brille auch auf eine übliche Brillenfassung aufsteckbar ausgebildet werden.

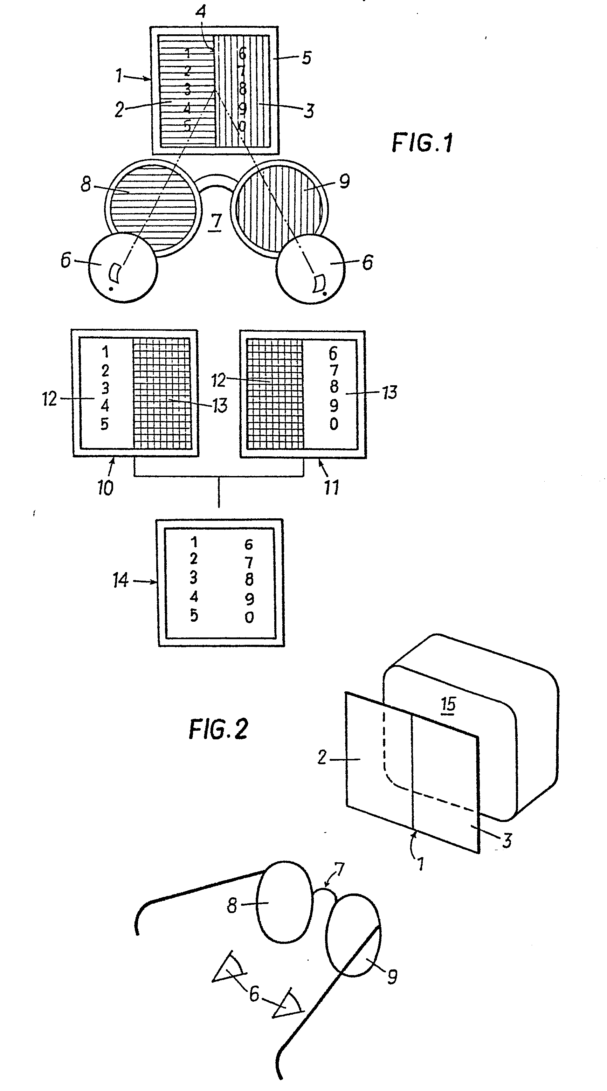

In der Zeichnung ist ein Ausführungsbeispiel der Erfindung schematisch dargestellt. Fig.1 zeigt das Schema der
Erfindung, während Fig.2 die Erfindung in der Anwendung in
axonometrischer Darstellung zeigt.

Gemäß Fig.1 befindet sich vor einem Bild, das schematisch durch die Ziffern 1 bis 0 dargestellt ist, ein Filterschirm 1, der aus zwei linearen Polarisationsfiltern 2,3 besteht, die jeweils die linke bzw. rechte Hälfte des Filterschirmes 1 bilden und das hinter ihnen liegende Bild jeweils zur Hälfte abdecken. Die beiden nebeneinander angeordneten Polarisationsfilter 2,3 stoßen in der Mitte entlang
einer vertikalen Linie 4 zusammen, überlappen sich jedoch
nicht und sind in einem Rahmen 5 des Filterschirms 1 gehalten. Das linke Polarisationsfilter 2 läßt nur horizontal
linear polarisiertes Licht hindurch, was durch eine waagrechte Schraffur schematisch angedeutet ist. Das rechte Polarisationsfilter 3 läßt hingegen nur senkrecht linear polarisiertes Licht hindurch, was durch vertikale Schraffur
angedeutet ist. Der Patient trägt vor seinen Augäpfeln 6
eine Brille 7, deren linkes Glas ein lineares Polarisationsfilter 8 bildet, das nur horizontal linear polarisiertes Licht hindurchläßt. Das rechte Glas der Brille 7 bildet
hingegen ein lineares Polarisationsfilter 9, welches nur senkrecht linear polarisiertes Licht hindurchläßt. Somit entsteht für das linke Auge ein monokularer Seheindruck 10, der nur die linke Bildhälfte 12 zeigt, während die rechte Bildhälfte 13 dunkel erscheint. Für das rechte Auge entsteht hingegen ein monokularer Seheindruck 11, welcher die linke Bildhälfte 12 dunkel zeigt, wogegen die rechte Bildhälfte 13 erkennbar ist. Der Patient kann daher mit dem linken Auge nur den linken Teil und mit dem rechten Auge nur den rechten Teil des Bildes sehen. Der Patient wird dadurch gezwungen, seine vorhandenen Augenstellungsanomalien durch Fusion auszugleichen, um ein vollständiges Bild 14 erkennen zu können. Sieht der Patient hingegen monokular, so erscheint ihm ein Teil des Bildes 14 schwarz.

In der Praxis empfiehlt es sich, eine Anordnung nach Fig.2 zu verwenden, bei welcher vor einem Fernsehbildschirm 15, der das Bild zeigt, der Filterschirm 1 mit seinen Polarisationsfiltern 2,3 so angeordnet ist, daß der Fernsehbildschirm 15 für den Betrachter zur Gänze durch den Filterschirm 1 abgedeckt ist. Der Betrachter trägt vor seinen Augäpfeln 6 die Brille 7 mit ihren Polarisationsfiltern 8,9. Durch die gerade beim Fernsehen auftretende längere Betrachtungszeit wird ein langdauernder Schulungseffekt für die Augen des Patienten erreicht, auch bei Kindern, die auf diese Weise das zur Behebung des Augenmuskelfehlers nötige Training nicht lästig empfinden.

Die Polarisationsfilter 8,9 können als linear polarisierte Gläser, jedoch auch als linear polarisierte Folien ausgebildet sein. Solche Folien können auch als Aufsteckfilter zu einer normalen Brille ausgebildet sein, was insbesondere für Brillenträger vorteilhaft ist.

Patentansprüche :

1. Vorrichtung zur Schulung bzw. zum Training der äußeren Augenmuskulatur, insbesondere bei Heterophorie oder Strabismus, mit einer Brille, dadurch gekennzeichnet, daß die Brille (7) für die beiden Augen (6) lineare Polarisationsfilter (8;9) hat, von denen die Polarisationsrichtung des dem einen Auge (6) zugeordneten Filters (8) normal zu jener des dem anderen Auge (6) zugeordneten Filters (9) ist und daß ein ein Bild (14) abdeckender Filterschirm (1) vorgesehen ist, der aus linearen Polarisationsfiltern (2,3) zusammengesetzt ist, deren Polarisationsrichtungen gleich sind den beiden Polarisationsrichtungen der Polarisationsfilter (8,9) der Brille (7).

2. Vorrichtung nach Anspruch 1, dadurch gekennzeichnet, daß der Filterschirm (1) zu gleichen Anteilen aus Polarisationsfiltern (2,3) der beiden Polarisationsrichtungen zusammengesetzt ist.

3. Vorrichtung nach Anspruch 2, dadurch gekennzeichnet, daß die eine Hälfte des Filterschirmes (1) der einen Polarisationsrichtung, die andere der anderen Polarisationsrichtung angehört.

4. Vorrichtung nach einem der Ansprüche 1 bis 3, dadurch gekennzeichnet, daß das Bild (14) ein bewegtes Bild, insbesondere ein Fernsehbild ist.

5. Vorrichtung nach einem der Ansprüche 1 bis 4, dadurch gekennzeichnet, daß die Polarisationsfilter (8,9) der Brille (7) auf die Brillenfassung aufsteckbar sind.

6. Vorrichtung nach einem der Ansprüche 1 bis 5, dadurch gekennzeichnet, daß die Polarisationsfilter (8,9) der Brille (7) Gläser oder Folien sind.

FIG.1

FIG.2

**Europäisches Patentamt**

## EUROPÄISCHER RECHERCHENBERICHT

### EINSCHLÄGIGE DOKUMENTE

EP 83890240.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 2 837 086 (M.R. THORBURN) | 1-4 | A 61 F 9/00 |
| Y | * Gesamt * | 5,6 | A 61 H 5/00 |
| | -- | | |
| Y | GB - A - 1 542 485 (POLAROID CORP.) | 5,6 | |
| | * Gesamt, insbesonders Seite 3, Zeilen 11-13, 105-111 * | | |
| | -- | | |
| X | US - A - 2 837 087 (P.A. SAWYER) | 1-4,6 | |
| | * Fig. 1; Spalte 4, Zeile 21 - Spalte 5, Zeile 19 * | | |
| | -- | | |
| A | US - A - 3 082 763 (S.C. MC LAUGH-LIN) | 1-4,6 | |
| | * Gesamt * | | |
| | -- | | |
| A | DE - A1 - 2 452 010 (GESELLSCHAFT FÜR STRAHLEN- UND UMWELTFORSCHUNG) | 1-4,6 | |
| | * Fig. 2; Seite 3, letzter Absatz * | | |
| | -- | | |
| A | FR - A - 937 435 (J.M.A. BRIZON) | 6 | |
| | * Gesamt * | | |
| | ---- | | |

**RECHERCHIERTE SACHGEBIETE (Int. Cl. ³)**

A 61 F 9/00

A 61 H 5/00

G 02 C 7/00

G 02 C 9/00

G 03 B 35/00

Der vorliegende Recherchenbericht wurde für alle Patentansprüche erstellt.

| Recherchenort | Abschlußdatum der Recherche | Prüfer |
|---|---|---|
| WIEN | 09-04-1983 | LUDWIG |